# EUROPEAN PATENT APPLICATION

(11) **EP 3 067 840 A1**
(43) Date of publication of application: **14.09.2016**
(21) Application number: 16158508.8
(22) Date of filing: 03.03.2016
(51) Int. Cl.: G06Q 10/04, G06Q 50/06, G06Q 30/08

(54) **ENERGY CONTROL UNIT, ENERGY CONTROL SYSTEM, AND ENERGY MANAGEMENT METHOD**

(30) Priority: 13.03.2015 JP 2015050306
(71) Applicant: Hitachi, Ltd., Tokyo 100-8280 (JP)
(72) Inventor: MAEGAWA, Kenji, Chiyoda-ku, Tokyo 100-8280 (JP); INAGAKI, Seiji, Chiyoda-ku, Tokyo 100-8280 (JP)
(74) Representative: Moore, Graeme Patrick

(57) **Abstract**

Provided is a technique for improving the accuracy of the demand adjustment by a consumer in a demand response. An energy control unit includes: a data accumulator that accumulates response measurement data obtained by measuring responses to control executed in relation to a demand amount of energy used by a consumer; a learner that calculates response characteristics which are characteristics to control for adjusting the demand amount based on the response measurement data; an energy consumption planner that creates an energy consumption plan which is a time-series control plan on the energy consumption of the consumer; a management planner that creates a DR management plan for updating the energy consumption plan based on the response characteristics so that the demand amount is adjusted according to a demand adjustment request; a management determiner that updates the energy consumption plan according to the DR management plan when a bidding based on the DR management plan is successful; and a manager that executes control on a plurality of controllers of the consumer according to the energy consumption plan.

## Description

### BACKGROUND OF THE INVENTION

### 1. Field of the Invention

The present invention relates to a technique of adjusting the energy demand of consumers according to a demand response.

### 2. Description of the Related Art

A scheme called a demand response that varies the demand amount of consumers in an electric power system to balance the demand and the supply of electricity with each other has been gathering attention (see Japanese Patent Application Publication No. 2014-60879 and Japanese Patent Application Publication No. 2014-115878). As one type of the demand response, a scheme in which an aggregator mediates between an electric power company and consumers to integrate a plurality of consumers to submit a bid for the adjustment of a demand amount in an energy trading market is known.

When it is desired to suppress an overall electricity demand of an electric power system, an electric power company requests cooperation in suppression of the demand amount in the energy trading market, for example. A plurality of consumers is registered to an aggregator and the aggregator makes a bid based on a demand adjustment amount achievable by the cooperation of these consumers. In the energy trading market, a successful bid is determined based on the bids of the respective aggregators and the like. An aggregator who made the successful bid suppresses the demand amount with cooperation of consumers. A consumer who has cooperated in suppressing the demand amount receives a monetary reward via the aggregator from the electric power company.

A control unit called an energy management system (EMS) is installed in a consumer's house to visually show the use amount of electricity and control electric apparatuses and the like to save electricity (reduce CO₂ emission). The adjustment of the demand amount of a consumer who complied with the demand response is performed by this control unit.

### SUMMARY OF THE INVENTION

The aggregator adjusts the demand amount according to a demand response in the following manner, for example. The aggregator collects energy management plans, by which consumers can adjust the demand amount, from each consumer and aggregates the energy management plans to determine bidding content. The bidding content includes a bidding price which is a reward price for suppression of the demand amount and a trading condition including various items of information related to demand suppression.

Since the aggregator determines the bidding content based on the energy management plans, when the aggregator made a successful bid, each consumer needs to adjust the demand amount as per the energy management plan.

Like the demand response disclosed in Japanese Patent Application Publication No. 2014-115878, when the demand response is applied to a relatively large building such as a skyscraper or a plant, an air-conditioning facility or the like is generally designed by taking the installation environment or the like into consideration. Thus, the response to the control of demand adjustment in the energy management can be predicted with a certain degree of accuracy.

However, in such a demand response that an aggregator collects information from ordinary houses as disclosed in Japanese Patent Application Publication No. 2014-115878, the installation and use environments of electric apparatuses are different from one consumer to another. Thus, it is difficult to accurately predict the responses to the control of the adjustment of the demand amount in each consumer. If the prediction accuracy of the responses to the control of the adjustment of the demand amount in each consumer is low, an aggregator who made a successful bid for the demand adjustment in an energy trading market may be unable to adjust the demand amount according to the demand response as per the contract.

An object of the present invention is to provide a technique for improving the accuracy of the demand adjustment by a consumer in a demand response.

An energy control unit according to an aspect of the present invention is an energy control unit that manages an energy demand of a consumer who complies with a demand response, including: a data accumulator that accumulates response measurement data obtained by measuring responses to control executed in relation to a demand amount of energy used by a consumer; a learner that calculates response characteristics which are characteristics to control for adjusting a demand amount of energy used by the consumer based on the response measurement data; an energy consumption planner that creates an energy consumption plan which is a time-series control plan on the energy consumption of the consumer; a management planner that creates a demand response management plan for updating the energy consumption plan based on the response characteristics so that the demand amount of energy of the consumer is adjusted according to a given demand adjustment request; a management determiner that updates the energy consumption plan according to the demand response management plan when a bidding based on the demand response management plan is successful in an energy trading market; and a manager that executes control on the plurality of controllers of the consumer according to the energy consumption plan.

According to the present invention, even when highly accurate response characteristics information is not provided in advance, it is possible to improve the accuracy of the demand adjustment by the consumer in the demand response.

### BRIEF DESCRIPTION OF THE DRAWINGS

FIG. 1 is a block diagram of an integrated energy management system;
FIG. 2 is a flowchart illustrating an overall operation of the integrated energy management system;
FIG. 3 is a block diagram of an aggregation system;
FIG. 4 is a block diagram of an integrated control unit;
FIG. 5 is a graph illustrating an operation example of the integrated control unit;
FIG. 6 is a flowchart illustrating the operation example illustrated in FIG. 5;
FIG. 7 is a table illustrating an incentive calculation example in the operation example illustrated in FIG. 5;
FIG. 8 is a diagram illustrating a display example of a main screen of a setting display;
FIG. 9 is a diagram illustrating a display example of a schedule setting screen of the setting display;
FIG. 10 is a diagram illustrating a display example of the schedule setting screen of the setting display;
FIG. 11 is a flowchart illustrating a process of creating an energy consumption plan for a normal operation;
FIG. 12 is a diagram illustrating a display example when setting demand response information of the setting display;
FIG. 13 is a flowchart illustrating a process of setting the demand response information;
FIG. 14 is a flowchart illustrating a process of responding to a DR request from an aggregation system 20 of an integrated control unit 11; and
FIG. 15 is a flowchart illustrating a process of responding to a DR request from the aggregation system 20 of the integrated control unit 11.

### DESCRIPTION OF THE PREFERRED EMBODIMENTS

Embodiments of the present invention will be described with reference to the drawings.

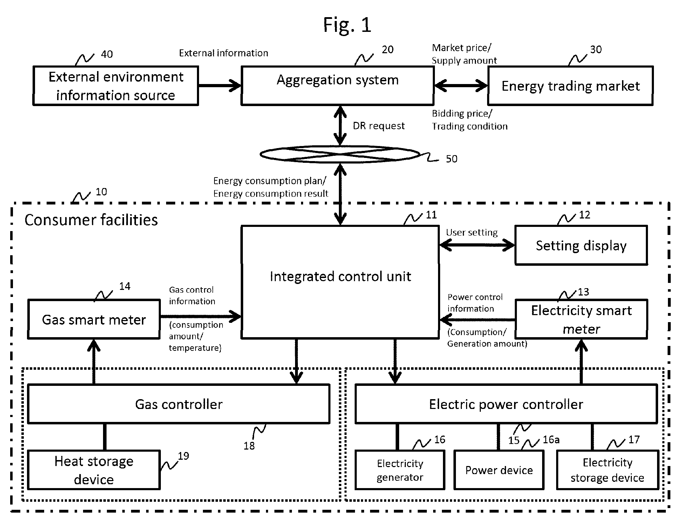

FIG. 1 is a block diagram of an integrated energy management system. Referring to FIG. 1, consumer facilities 10 are connected to an aggregation system 20 via a network 50. The aggregation system 20 is further connected to an energy trading market 30 and an external environment information source 40.

A consumer is an ordinary house, for example, and uses a plurality of types of energy sources to cool and heat the inside and the outside of the house and to do various other daily living activities. In this example, it is assumed that the house uses electricity and gas. The consumer facilities 10 include an integrated control unit 11, a setting display 12, an electricity smart meter 13, a gas smart meter 14, an electric power controller 15, an electricity generator 16, an electricity storage device 17, a gas controller 18, and a heat storage 19.

The electricity smart meter 13 collects a consumption amount, a storage amount, or a generation amount of electric energy from an electric apparatus (a consumer apparatus that consumes, stores, or generates electric energy) among the consumer facilities 10 and transmits the collected information to the integrated control unit 11. The gas smart meter 14 collects a consumption amount or a storage amount of energy from a gas apparatus (a consumer apparatus that consumes or stores gas energy) among the consumer facilities 10 and transmits the collected information to the integrated control unit 11.

The integrated control unit 11 manages various types of energy used by the consumer in an integrated manner and complies with a demand response in the energy trading market 30 via the aggregation system 20. The integrated control unit 11 receives a demand adjustment request of the demand response from the aggregation system 20 via the network 50 and executes a process of responding to the demand adjustment request and a process for adjusting the actual demand amount of the demand response.

The integrated control unit 11 receives an input of various types of information such as a room temperature setting or a home-staying schedule setting from the consumer with the aid of the setting display 12 and presents various types of information such as an energy consumption plan or a consumption result to the consumer to makes setting for a normal operation and a demand response operation.

During the normal operation and the demand response operation, the integrated control unit 11 controls electric apparatuses using the electric power controller 15 and control gas apparatuses using the gas controller 18 to adjust the demand amounts of electricity and gas. The electric apparatuses include the electricity generator 16 and the electricity storage device 17 as well as various power devices 16a that operate by consuming electricity. The gas apparatuses include the heat storage 19 that generates heat with gas energy and stores the heat so that the heat can be used for warming rooms and supplying hot water.

In this case, the integrated control unit 11 detects an electricity consumption amount of the consumer using the electricity smart meter 13 and detects a gas consumption amount of the consumer using the gas smart meter 14. Moreover, the integrated control unit 11 acquires the amount of electricity generated by the electricity generator 16 and the amount of electricity stored in the electricity storage device 17 from the electricity smart meter 13.

The consumer can receive an incentive fee as a reward by adjusting the demand amount in response to the demand adjustment request of the demand response.

The aggregation system 20 is a system for allowing an aggregator to manage the energy of a plurality of consumers in an integrated manner. The aggregator manages a plurality of consumers using the aggregation system 20 in an integrated manner, sends a demand adjustment request to these consumers in response to a demand response, and trades energy in the energy trading market 30 based on a demand amount adjustable by consumers who complied with the request. The profit of the energy trading is shared by the aggregator and the consumers. The profit distributed from the aggregator to the consumer is the incentive fee.

The aggregation system 20 notifies the integrated control unit 11 of external information obtained from the external environment information source 40 to allow the integrated control unit 11 to calculate the demand amount adjustable for the demand adjustment request. The external information is information on external environment such as the weather or the temperature which affects the demand amount or the consumption amount of energy.

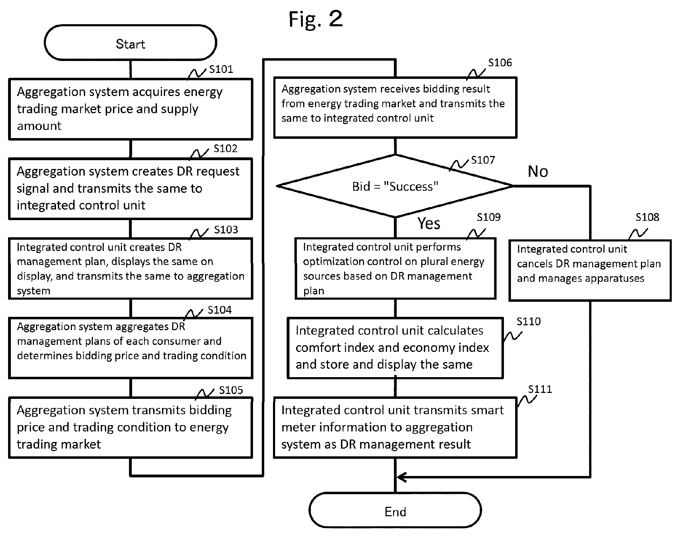

FIG. 2 is a flowchart illustrating an overall operation of the integrated energy management system. The series of processes in FIG. 2 are executed by the aggregation system 20 and the integrated control unit 11 in collaboration.

First, the aggregation system 20 acquires information on a market price and a supply amount of energy in the energy trading market 30 (step S101). In this way, the aggregation system 20 can predict the amount of energy that can be sold in the energy trading market 30 and the market price of the energy.

The aggregation system 20 generates a demand adjustment request signal (DR request signal) based on the energy amount and transmits the DR request signal to each integrated control unit 11 (step S102). For example, a demand adjustment amount demanded to each consumer may be adjusted so that a total demand amount adjustable by a plurality of consumer is equal to or larger than an energy amount that can be sold in the energy trading market 30. The DR request signal may include a time slot in which a demand amount is to be adjusted and the adjustment amount, for example. In many case, the adjustment of the demand amount is the curtailment of the demand amount.

The integrated control unit 11 having received the DR request signal creates a demand response management plan (DR management plan) for adjusting the demand amount by a requested amount in a time slot requested in the DR request signal, displays the DR management plan on the setting display 12, and transmits the content of the DR management plan to the aggregation system 20 (step S103).

The aggregation system 20 aggregates the DR management plans received from the integrated control units 11 of the respective consumers and determines a bidding price and a trading condition at which the incentive fee of the consumer and the profit of the aggregator can be secured and a successful bid for energy trading can be made in the energy trading market 30 (step S104). After that, the aggregation system 20 enters a bid into the energy trading market 30 (step S105).

After that, a bidding result is transmitted from the energy trading market 30 to the aggregation system 20, and the aggregation system 20 receives the bidding result and transmits the same to the integrated control unit 11 (step S106). Upon receiving the bidding result, the integrated control unit 11 determines whether the bidding was successful (that is, established) (step S107).

When the bidding was not successful, the integrated control unit 11 cancels the DR management plan and manages electric apparatuses and gas apparatuses in the normal operation (step S108).

On the other hand, when the bidding was successful, the integrated control unit 11 manages energy using a plurality of energy sources (in this example, electricity and gas) according to a demand response in a time slot in which a demand response operation is to be performed based on the DR management plan (step S109).

The integrated control unit 11 calculates and stores a comfort index and an economy index during the demand response operation and displays the indices on the setting display 12 (step S110). The comfort index is information indicating the degree of the comfort felt by a person. The economy index is information indicating the degree of economic loss and gain.

During or after the demand response operation, the integrated control unit 11 transmits information on an energy consumption amount collected by the electricity smart meter 13 and the gas smart meter 14 to the aggregation system 20 as a demand response management result (step S111).

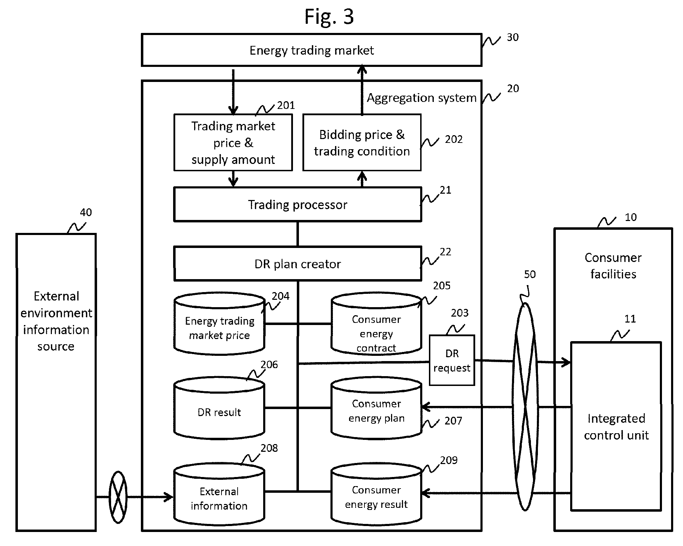

FIG. 3 is a block diagram of the aggregation system. The aggregation system 20 includes a trading processor 21 and a DR plan creator 22. Moreover, the aggregation system 20 has a database in which energy trading market price information 204, consumer energy contract information 205, DR result information 206, consumer energy plan information 207, external information 208, and consumer energy result information 209 are stored.

The energy trading market price information 204 is an energy price at which trading was established in the energy trading market 30 in the past. The consumer energy contract information 205 is information indicating the content of an energy contract for each consumer and includes information on a demand response contract with the aggregator. For example, information indicating whether the consumer has complied with a demand response is included in the energy trading market price information 204. The DR result information 206 is information on the result of a demand response performed in the past and includes information on whether a past bidding was successful and the content of a DR management plan at that time. The consumer energy plan information 207 is information on energy consumption plans created by respective consumers in the past demand responses. The energy consumption plan is a time-series control plan on energy consumption. The external information 208 is information that was received from the external environment information source 40 in the past. The external information 208 includes the weather, the temperature, an event occurred, and the like which are associated with date and time. The consumer energy result information 209 includes information on the energy amounts that were actually consumed by respective consumers in the past demand responses.

The trading processor 21 receives information on the market price and the supply amount of energy from the energy trading market 30. The market price information is the price of energy traded in the energy trading market 30. The supply amount information includes information on an energy amount which is demanded to be traded in the energy trading market 30 and a time slot in which the energy is demanded.

The trading processor 21 having received the information on the market price and the supply amount of energy in the energy trading market 30 requests the DR plan creator 22 to create a DR plan based on these items of information.

The DR plan creator 22 creates a DR plan in collaboration with the integrated control units 11 of the respective consumers and transmits the created DR plan to the trading processor 21. This process will be described in detail below.

First, the DR plan creator 22 creates a demand adjustment request 203 of the demand response based on the information on the market price and the supply amount of energy and transmits the demand adjustment request 203 to the integrated control units 11 of the respective consumers. According to the demand response, an aggregator has to secure its profit even if an incentive fee is paid to a consumer who has complied with a demand adjustment request. The DR plan creator 22 determines a target consumer to which a demand adjustment request is to be transmitted and creates a demand adjustment request under a trading condition at which the profits of the aggregator itself and the consumer can be secured and successful bidding is expected. The demand adjustment request includes a time slot in which a demand amount is to be adjusted, a demand amount that is to be adjusted, and an incentive fee paid to the consumer who has adjusted the demand amount.

For example, the DR plan creator 22 extracts a consumer corresponding to the demand response by referring to the consumer energy contract information 205 and determines a target consumer to which a request is to be transmitted. In this case, the demand response request may be transmitted to all extracted consumers and may be transmitted to consumers selected from them. For example, the request may be transmitted preferentially to a consumer who has complied with a past demand response request or may be transmitted preferentially to a consumer of which the demand adjustment accuracy in the past demand response is a predetermined value or higher.

Further, the DR plan creator 22 calculates a lower limit of the bidding price at which the aggregator itself and the consumer can secure a certain profit or higher by referring to the consumer energy plan information 207 and the consumer energy result information 209. Moreover, the DR plan creator 22 determines the probability that a bid for the demand response is successful with the market price and the supply amount of energy, the time slot, and the like into consideration by referring to the energy trading market price information 204 and the DR result information 206 and calculate an upper limit of the bidding price at which a certain probability or higher is obtained. When the calculated upper limit of the bidding price is higher than the lower limit, the DR plan creator 22 determines to transmit such a demand response request that the upper limit is used as the bidding price.

When the demand adjustment request and a target consumer to which the request is to be transmitted are determined, the DR plan creator 22 transmits the demand adjustment request to the integrated control unit 11 of the target consumer. The DR plan creator 22 also transmits the external information supplied from the external environment information source 40 to the integrated control units 11 of each consumer. After that, the DR plan creator 22 receives the DR management plans of each consumer from the integrated control units 11. The DR plan creator 22 having received the DR management plans of each consumer aggregates the DR management plans, creates an overall DR plan of the aggregator, and transmits the DR plan to the trading processor 21. The overall DR plan of the aggregator includes information on the bidding price and the trading condition in the energy trading market 30, of the demand response.

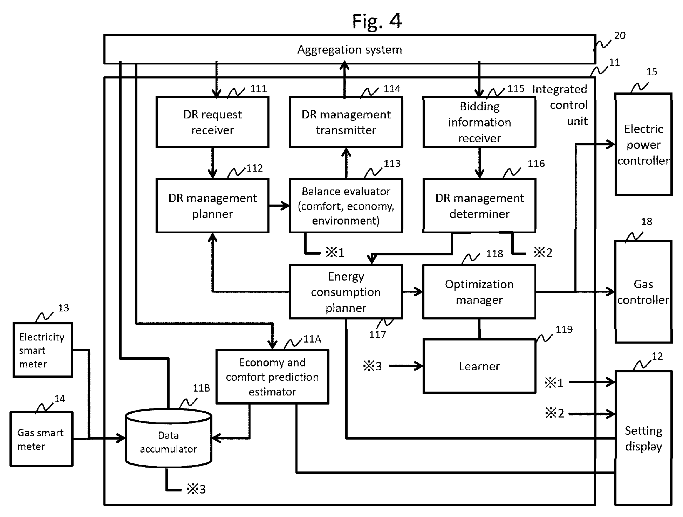

FIG. 4 is a block diagram of the integrated control unit. The integrated control unit 11 includes a DR request receiver 111, a DR management planner 112, a balance evaluator 113, a DR management transmitter 114, a bidding information receiver 115, a DR management determiner 116, an energy consumption planner 117, an optimization manager 118, a learner 119, a prediction estimator 11A, and a data accumulator 11B.

The DR request receiver 111 receives the demand adjustment request from the aggregation system 20. The demand adjustment request designates a time slot in which a demand amount is to be adjusted and a demand amount that is to be adjusted.

The DR management planner 112 creates a DR management plan based on the demand adjustment request received by the DR request receiver 111. The DR management plan is a control plan for adjusting (curtailing) the demand amount by a requested amount in a time slot requested in the demand adjustment request. The DR management plan changes an energy consumption plan in a predetermined time slot within a daily energy consumption plan designed in advance according to the demand response.

The balance evaluator 113 creates balance evaluation information which associates a curtailed energy amount and a reward in the DR management plan and presents the balance evaluation information to the consumer.

The DR management transmitter 114 transmits the DR management plan created by the DR management planner 112 to the aggregation system 20. In this case, the DR management transmitter 114 may transmit the DR management plan to the aggregation system 20 when the consumer checks the balance evaluation information presented by the balance evaluator 113 and inputs the notice of acceptance.

The bidding information receiver 115 receives the result of bidding to the energy trading market 30, obtained by the aggregation system 20 aggregating the DR management plans from the respective consumers.

The DR management determiner 116 determines whether the bidding information receiver 115 will perform control according to the DR management plan based on the received bidding result information. For example, it is determined that control for the demand response is performed when the bidding result indicates success (that is, successful bidding). When it is determined that the demand response is to be performed, the DR management determiner 116 causes the energy consumption planner 117 to update the energy consumption plan according to the DR management plan.

The energy consumption planner 117 creates an energy consumption plan in advance, indicating expected energy consumption during a normal operation where there is no demand response.

In this case, the energy consumption planner 117 may create the energy consumption plan based on a schedule indicating an expected behavior of a consumer. For example, if an air-conditioning device can set and control a room temperature, the air-conditioning device may be stopped when a consumer is absent from home and the air-conditioning device may operate at a predetermined setting temperature when the consumer stays at home. Moreover, when the consumer is sleeping, the air-conditioning device may be stopped or may operate in a predetermined sleep mode.

The energy consumption planner 117 may design such a control input method that a response output is appropriately controlled at a control target value as the energy consumption plan. For example, when the room temperature is controlled by a combination of an electric energy-based heater and a gas energy-based heater, the energy consumption plan may be designed to appropriately control the electric heater and the gas heater so that the room temperature is maintained at a setting temperature set by the prediction estimator 11A. When the demand response is performed, the energy consumption plan during normal time, created in advance by the energy consumption planner 117 is changed such that an energy consumption plan on a certain date in a certain time slot is changed according to the instruction of the DR management determiner 116.

The optimization manager 118 outputs control instructions to the electric power controller 15 and the gas controller 18 based on the latest energy consumption plan. In this case, the control input may be determined by taking the response characteristics calculated by the learner 119 so that the response output has a desired value. For example, when an air-conditioning facility or a heating facility is controlled, the setting temperature may be used as the control input and the actual room temperature may be used as the response output. The electric power controller 15 and the gas controller 18 control the electric apparatus and the gas apparatus, respectively, according to the instruction from the optimization manager 118.

It is possible to predict, from response characteristics, how the room temperature changes if the setting temperature is changed with time. Although the room temperature may deviate from a desired value due to the influence of external environment, in this case, the room temperature can be maintained to a desired value by feedback control by taking response characteristics into consideration. The energy consumption data used by the optimization manager 118 may be created in advance by the energy consumption planner 117 or may be updated later to realize the demand response.

The learner 119 calculates the response characteristics based on response measurement data obtained by measuring the responses to the control executed in the past demand adjustment performed according to the demand responses. The response characteristics indicate the relation between the control on the demand amount of energy used by a consumer and the response to the control and are used in the computation by the optimization manager 118.

The prediction estimator 11A determines the value of such a control input that can realize adjustment of a desired demand amount by the demand response. In this case, the prediction estimator 11A can present the consumer with a demand amount reduced when the control input was used and an incentive fee that the consumer obtains when the demand amount was adjusted according to the control input.

The data accumulator 11B accumulates response measurement data obtained by measuring the responses to the control executed in the past demand adjustment performed according to the demand responses.

As described above, in the present embodiment, the data accumulator 11B accumulates the response measurement data obtained by measuring the responses to the control executed in relation to the demand amount of energy used by the consumer. The learner 119 calculates the response characteristics which are the characteristics of the responses to the control for adjusting the demand amount of the energy used by the consumer based on the response measurement data. The energy consumption planner 117 creates the energy consumption plan which is a time-series control plan on the energy consumption of the consumer. The DR management planner 112 creates, based on the response characteristics, the DR management plan for updating the energy consumption plan so that the energy demand amount of the consumer is adjusted according to a given demand adjustment request. The DR management determiner 116 updates the energy consumption plan according to the DR management plan when the bidding based on the DR management plan was successful in the energy trading market 30. The optimization manager 118 executes control on the consumer according to the energy consumption plan. As a result, control on the energy demand adjustment is performed based on the response characteristics obtained by learning the response measurement data obtained by measuring the responses to the executed control. Therefore, even when highly accurate response characteristics information is not provided in advance, it is possible to improve the accuracy of the demand adjustment by the consumer in the demand response.

Hereinafter, more specific configuration and operation of the present embodiment will be described.

The DR management planner 112 creates a DR management plan for a plurality of types of energy including electric energy based on a predetermined energy policy. Since the DR management planner 112 creates the DR management plan for a plurality of types of energy based on the predetermined energy policy, it is possible to appropriately control the plurality of types of energy according to the energy policy in an integrated manner. According to an example of the energy policy, electricity is used more preferentially than gas in order to suppress CO₂ emission as much as possible.

The consumer includes the electricity storage device 17 as an internal electric energy supply source and can further use gas energy. The DR management planner 112 creates the DR management plan in the demand response so that electric energy obtained by discharging the electricity storage device 17 is used and the use of gas energy starts when the electricity storage amount of the electricity storage device 17 decreases to a predetermined amount. By doing so, since energy is used in the priority order from the electricity storage device 17 to gas when the demand amount of electricity is decreased, CO₂ emission can be suppressed as much as possible when the demand amount is adjusted.

In the present embodiment, the consumer includes an electric air-conditioning device as an electric apparatus. The air-conditioning device mentioned herein includes not only a convection air-conditioning device represented by an air-conditioner that changes the temperature of the temperature of a space itself and circulates the temperature-controlled air but also a radiation air-conditioning device represented by a reflecting stove that spreads heat by radiation.

A demand response setting temperature which is a setting temperature during a demand response operation and is lower than a normal setting temperature which is a setting temperature during a normal operation is set in advance. The DR management planner 112 creates such a DR management plan such that the setting temperature is changed from the normal setting temperature to the demand response setting temperature when the demand response operation starts and such that discharge of the electricity storage device 17 starts to maintain the room temperature at the demand response setting temperature when the room temperature reaches the demand response setting temperature. By doing so, the DR management plan is created by taking the discharge of the electricity storage device 17 into consideration based on the response characteristics of the room temperature to the control of the electric air-conditioning device when the electricity storage device 17 is present. Thus, it is possible to obtain an energy consumption result similar to the DR management plan created during execution of the demand response.

In the present embodiment, the consumer further includes a gas air-conditioning device. The DR management planner 112 creates such a DR management plan such that the electric air-conditioning device is stopped and the gas air-conditioning device is operated so that the room temperature is maintained at the demand response setting temperature in a case where the electricity storage amount of the electricity storage device 17 decreases to a predetermined amount when the room temperature is maintained at the demand response setting temperature by the discharge of the electricity storage device 17. Since the DR management plan is created such that the heating is switched to the gas air-conditioning device when the electricity storage amount of the electricity storage device 17 decreases to a predetermined amount, CO₂ emission can be suppressed as much as possible when the demand amount is adjusted.

In the present embodiment, the demand response has two energy consumption strategy modes including an economy emphasis mode in which a desired reward can be designated and a comfort emphasis mode in which an allowable demand response setting temperature can be designated. The integrated control unit 11 further includes the prediction estimator 11A. The prediction estimator 11A estimates setting temperatures to be applied to the normal operation and the demand response operation according to the energy consumption strategy mode, presents balance evaluation information which associates a curtailed energy amount and a reward corresponding to the setting temperature to the consumer with the aid of the setting display 12, and determines the setting temperature as the demand response setting temperature according to an operation of the consumer on the setting display 12. The DR management planner 112 creates the DR management plan according to the demand response setting temperature determined by the prediction estimator 11A. According to this configuration, since the consumer can determine the demand response setting temperature while viewing the setting temperatures and the rewards estimated in the respective modes, the consumer can participate in the demand response with confidence. As a result, it is possible to promote active participation in the demand response and to accelerate spread of the demand response. For example, the DR management planner 112 creates the DR management plan so that a total profit of a series of demand responses is maximized by a combination of a plurality of energy sources of electricity and gas.

The optimization manager 118 changes the setting temperature of the electric air-conditioning device to the demand response setting temperature when the consumer starts the demand response operation, starts the discharge of the electricity storage device 17 and monitors the electricity storage amount of the electricity storage device 17 when the room temperature reaches the demand response setting temperature, and stops the discharge of the electricity storage device 17 and stops the electric air-conditioning device to operate the gas air-conditioning device at the demand response setting temperature when the electricity storage amount decreases to a predetermined amount. According to this configuration, even when a change of the room temperature deviates from predictions, the actual room temperature can be reliably controlled to the demand response setting temperature while adjusting the demand amount as per the contract in the demand response. Thus, the comfort of the consumer is not sacrificed.

The data accumulator 11B may further accumulate the external information obtained when control and responses were measured. In this case, the learner 119 calculates the response characteristics in each environment state based on the response measurement data and the external information. The energy consumption planner 117 creates the energy consumption plan based on schedule information indicating an expected behavior of a consumer in each time slot, the response measurement data, and the external information. According to this configuration, since the energy consumption plan is created based on the response characteristics corresponding to the external information, even when the response characteristics change due to the influence of the external information, it is possible to create an appropriate energy consumption plan using the response characteristics corresponding to the environment at that time.

In the present embodiment, as a representative example, the control is control of a setting temperature of an air-conditioning device, the response is a room temperature, and the external information is at least one of the weather and an ambient temperature. Thus, even when the response characteristics of the room temperature to the setting temperature are influenced by the weather and the ambient temperature, it is possible to create an appropriate energy consumption plan.

Hereinafter, an operation example of the integrated control unit will be described. In this operation example, an example in which a consumer includes the electricity storage device 17 but does not include the electricity generator 16 as the consumer facilities 10 and can appropriately use a gas energy-based heater (gas heater) and an electric energy-based heater (electric heater) in combination will be described.

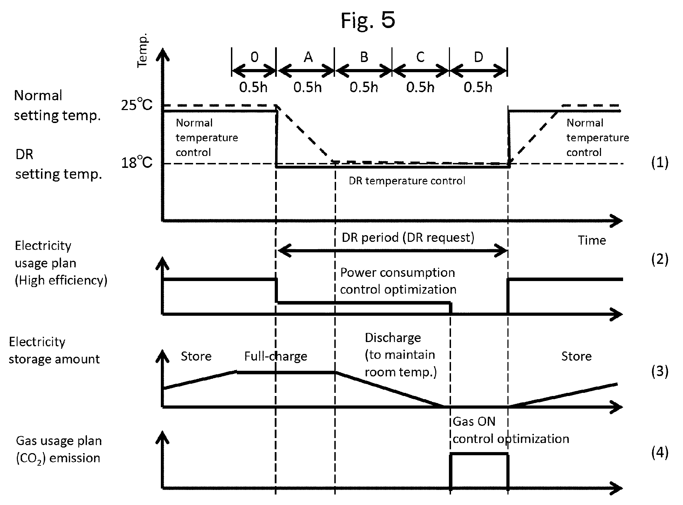

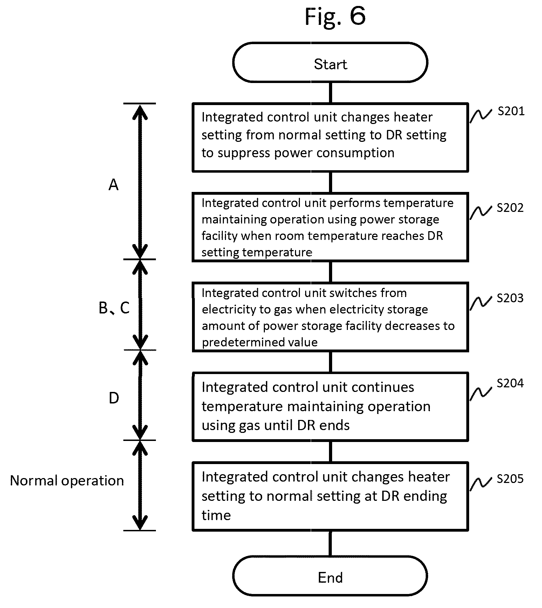

FIG. 5 is a graph illustrating an operation example of the integrated control unit. FIG. 6 is a flowchart illustrating the operation example illustrated in FIG. 5.

In FIG. 5, a demand response operation period and a period immediately before the period are divided into time slots 0, A, B, C, and D with a step of 0.5 hours. Graph (1) illustrates a setting temperature (solid line) of a heater and a room temperature (broken line). Graph (2) illustrates an electricity usage plan indicating a planned change in the consumption amount of supplied electricity. Graph (3) illustrates the electricity storage amount of the electricity storage device 17. Graph (4) illustrates a gas usage plan indicating a planned change in the consumption amount of gas.

In this example, the normal setting temperature is set to 25°C and the demand response setting temperature is set to 18°C. Moreover, a DR management plan is executed such that an operation mode proceeds from a normal operation to a demand response operation and returns to the normal operation after the demand response operation is continued for two hours.

First, in time slot 0, the integrated control unit 11 controls the heater in the normal operation. Specifically, the electric heater is operated at the setting temperature of 25°C. In this case, the electricity storage device 17 is in a full-charge state (that is, a state in which the electricity storage amount is equal to a largest charge capacity.

In time slot A, the integrated control unit 11 starts the demand response operation (step S201 in FIG. 6). Specifically, the setting temperature of the electric heater is changed from 25°C to 18°C. In this case, the room temperature gradually decreases from 25°C and reaches 18°C which is the demand response setting temperature around the end of time slot A. The power consumption in time slot A is suppressed lower than in time slot 0.

In time slot A, the learner 119 of the integrated control unit 11 learns the relation among an amount of change in the room temperature, a period required for the change, and the ambient temperature. Specifically, the room temperature measured every predetermined period is accumulated in the data accumulator 11B together with the information on the ambient temperature, and the learner 119 calculates the amount of change (response) in the room temperature per unit period and records the response in association with the ambient temperature.

In time slot B, the integrated control unit 11 starts discharging the electricity storage device 17 (step S202 in FIG. 6). The electricity discharged from the electricity storage device 17 is used for maintaining the room temperature at 18°C. In time slot B, low power consumption is maintained and the electricity storage amount of the electricity storage device 17 decreases slowly.

In time slot C, the integrated control unit 11 discharges the electricity storage device 17 to maintain the room temperature at 18°C continuously to time slot B. In time slot C, low power consumption is maintained and the electricity storage amount of the electricity storage device 17 decreases slowly. The electricity storage amount of the electricity storage device 17 reaches a predetermined value (in this example, zero) around the end of time slot C.

In time slots B to C, the learner 119 of the integrated control unit 11 learns the relation among a period in which the room temperature can be maintained by the discharge of the electricity storage device 17, the setting temperature of the electric heater, and the ambient temperature. Specifically, the information on the period in which the room temperature can be maintained at 18°C with the aid of the electricity storage device 17 is recorded in association with the setting temperature and the ambient temperature.

In time slot D, the integrated control unit 11 stops the electric heater and operates a gas heater at a setting temperature of 18°C (step S203 in FIG. 6) to maintain the room temperature at 18°C using the gas heater until the end of the demand response (step S204 in step 6).

The power consumption in time slot D is zero and the amount of electricity discharged by the electricity storage device 17 is zero. On the other hand, a certain amount of gas is consumed. Since the demand response operation ends around the end of time slot D, the integrated control unit 11 stops the gas heater to operate the electric heater at the setting temperature of 25°C and the operation mode returns to the normal operation (step S205 in FIG. 6).

When time slot D ends, the integrated control unit 11 learns the relation among a change in the room temperature until the room temperature reaches 25°C after the gas heater is stopped and the electric heater is operated, a period required for the change and the ambient temperature. Specifically, the room temperature measured every predetermined period is accumulated in the data accumulator 11B together with the ambient temperature, and the learner 119 calculates the amount of change in the room temperature per unit period and records the same in association with the ambient temperature.

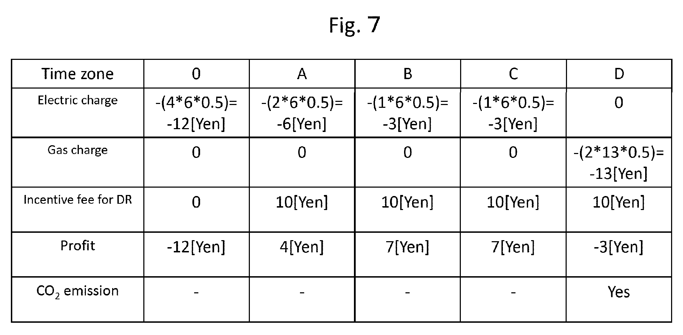

FIG. 7 is a table illustrating an incentive calculation example in the operation example illustrated in FIG. 5. In this example, an electric charge is 22 [Yen] for a wattage of 1 [kWh]. A gas charge is 13 [Yen] for a calorie of 1 [kWh]. In the case of a heat-pump scheme, it is expected that an approximately four-fold thermal efficiency is obtained. The electric charge for obtaining a calorie of 1 [kWh] is 6 [Yen] (= 1 [kWh] x (1/4) x 22 [Yen/kWh]). Moreover, it is assumed that the calorie required for maintaining the room temperature of 25°C is 4 [kWh] and the calorie required for maintaining the room temperature of 18°C is 2 [kWh]. Further, the incentive fee for demand adjustment is 20 [Yen/kWh].

In time slot 0, since the room temperature of 25°C is maintained using the electric heater, the electric charge is 12 [Yen] (= 4 [kWh] x 6 [Yen] x 0.5 [h]). The profit is -12 yens (that is, the expense is 12 yens).

In time slot A, since the room temperature of 18°C is maintained using the electric heater, the electric charge is 6 [Yen] (= 2 [kWh] x 6 [Yen] x 0.5 [h]). In time slot A, an incentive fee of 10 yens is paid since the consumer complied with the demand response. The profit is 4 yens.

In time slots B and C, although the room temperature of 18°C is maintained using the electric heater as in time slot A, since half of the electricity is produced by the discharge of the electricity storage device 17 and the electric charge is 3 [Yen] (= 1 [kWh] x 6 [Yen] x 0.5 [h]). An incentive fee of 10 yens is paid since the consumer complied with the demand response. The profit is 7 yens.

In time slot D, since the room temperature of 18°C is maintained by the gas heater, the gas charge is 13 [Yen] (= 2 [kWh] x 13 [Yen] x 0.5 [h]). An incentive fee of 10 yens is paid since the consumer complied with the demand response. The profit is -3 yens (that is, the expense is -3 yens).

Next, various settings on the integrated control unit 11 will be described. A consumer inputs various settings to the integrated control unit 11 while viewing a display screen of the setting display 12.

First, a schedule setting will be described with reference to the display screen of the setting display 12. The schedule set herein is the schedule in the normal operation.

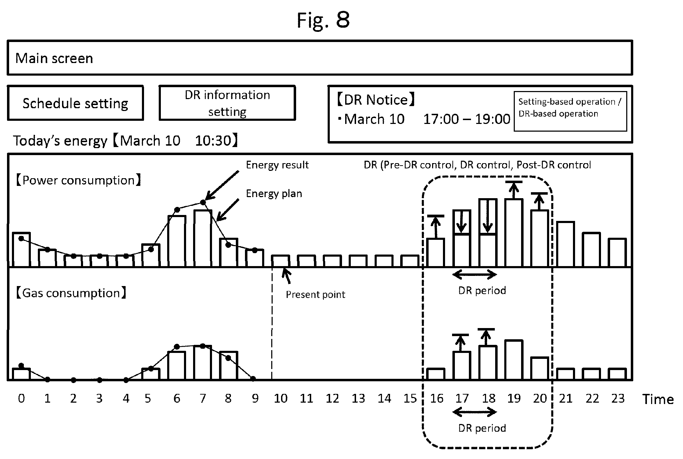

FIG. 8 is a diagram illustrating a display example of a main screen of the setting display.

On the main screen, plans and results of today's power and gas consumption are illustrated by graphs as today's energy. In the graphs, a time slot (hereinafter referred to as a "demand response time slot") in which a demand response is scheduled and time slots (these time slots will be collectively referred to as a "demand response control time slot") in which demand adjustment is performed as pre-control or post-control are illustrated so as to be distinguished from other time slots.

The demand response time slot is displayed by text as a DR notice as well as a graph. In the demand response control time slot, the demand amounts before and after the adjustment based on the demand response are displayed in the graph. The demand amounts before and after the adjustment can be visually identified by arrows directed from the demand amount before adjustment to the demand amount after adjustment.

A touch switch for moving to the schedule setting screen and a touch switch for moving to a DR information setting screen are also displayed on the main screen.

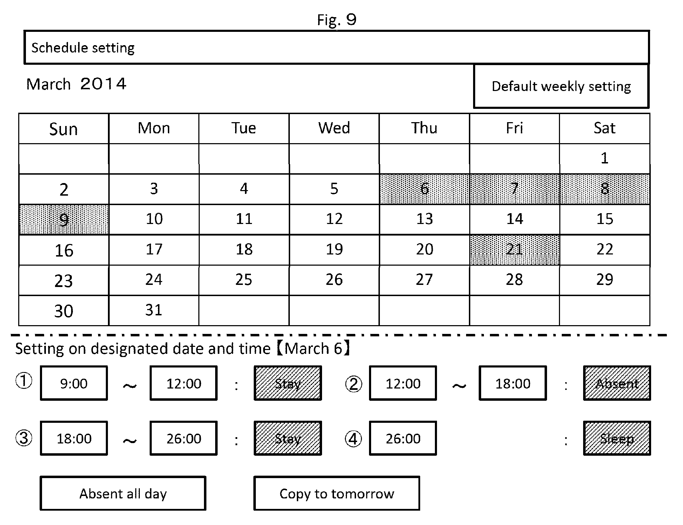

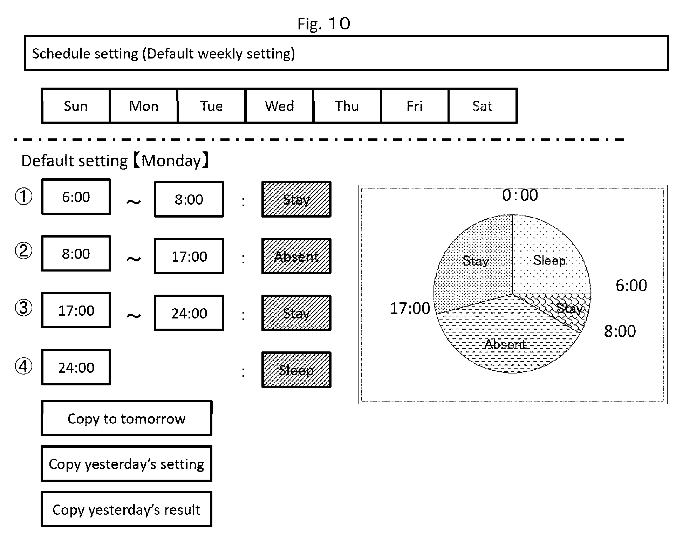

FIGS. 9 and 10 are diagrams illustrating a display example of the schedule setting screen of the setting display. When a user touches on the touch switch for moving to the schedule setting screen in FIG. 8, the screen of FIG. 9 is displayed.

FIG. 9 illustrates an individual setting screen on which the schedules of individual days can be set. A consumer inputs schedule settings on this screen when the schedule of an individual day such as a day on which a special event is scheduled is set.

A calendar is displayed on the upper part of FIG. 9 so that a user can select each date of a month by touching on the date. A date on which an individual schedule different from a default schedule is set is visually distinguished by color, hatching, fonts, or the like from the date on which the default schedule is set. In the example of FIG. 9, individual schedules are set on the dates 6, 7, 8, 9, and 21 of the month. When a user selects a certain date on the calendar by touching on the date, the schedules of each time slot of the selected date can be set.

A touch switch for moving to a screen for setting a default weekly schedule as a default weekly setting is displayed on the upper part of FIG. 9.

A screen for setting the individual schedules on each time slot is displayed on the lower part of FIG. 9. A user can set the schedule by designating a certain time or a period between two time points. In this example, the setting shows that a user stays at home in the periods from 9 to 12 o'clock and from 18 to 26 o'clock. Moreover, users is absent from home in the period from 12 to 18 o'clock. Further, users go sleeping at 26 o'clock.

A touch switch for setting that users will be absent from home all day and a touch switch for instructing to copy to tomorrow's setting are also displayed in the lower part of FIG. 9.

FIG. 10 is a diagram illustrating a display example of a default setting screen of the setting display 12. On the default setting screen, the schedules can be set for dates of default schedules at once. The example of FIG. 10 illustrates a screen for setting default schedules for each day of a week at once.

A touch switch of each day from Sunday to Saturday, for selecting a date of which the schedule is to be set is displayed on the upper part of FIG. 10. When a user selects a certain day of a week by touching on the day, the schedules of the day can be set.

A screen for setting the schedules of each time slot is displayed on the left side of the lower part. A consumer may set a starting time and an ending time and input the schedule of that period. As examples of the input schedule, "Stay" and "Absent" are illustrated. Moreover, a consumer may set a sleeping time and input the schedule "Sleep." In the example of FIG. 10, the consumer stays at home in the periods from 6 to 8 o'clock and from 17 to 24 o'clock, is absent from home in the period from 8 to 17 o'clock, and go sleeping at 24 o'clock. A touch switch for copying the set schedule to tomorrow's setting, a touch switch for copying yesterday's setting, and a touch switch for copying yesterday's results are also displayed on the lower part.

The schedules set on the left side of the lower part are visually displayed on the right side of the lower part as a pie chart.

As described above, in the present embodiment, when making a setting for a normal operation in the energy consumption plan, the energy consumption planner 117 provides a graphical user interface capable of displaying a screen for inputting a default setting of each time slot that is common to a selected day of a week, a calendar in which a date for which a setting different from the standard setting is made can be selected, and a screen for inputting an individual setting of each time slot for the date selected on the calendar. According to this configuration, since a consumer can set schedules by combining the standard setting and the individual setting as the setting of each time slot, the consumer can set the schedules efficiently when a daily schedule common to certain days of a week and a special schedule of a certain date are mixed, as seen at, for example, ordinary homes.

When the schedules are set by the individual setting and/or the standard setting, the integrated control unit 11 creates an energy consumption plan for the normal operation.

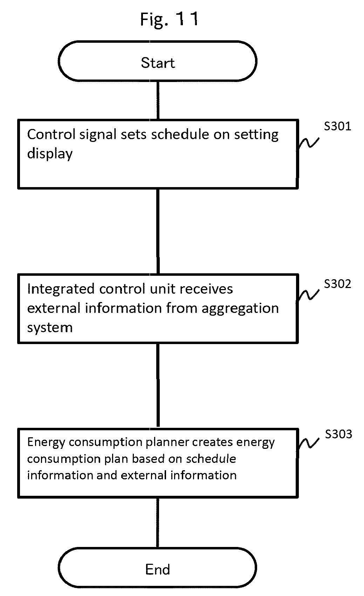

FIG. 11 is a flowchart illustrating a process of creating the energy consumption plan for the normal operation.

First, a consumer operates the setting display 12 to input schedules to the integrated control unit 11 (step S301). The schedules are set as illustrated in FIGS. 8 to 10.

The integrated control unit 11 in which the schedules are set receives external information from the aggregation system 20 (step S302). The energy consumption planner 117 of the integrated control unit 11 creates an energy consumption plan based on the set schedules and the received external information (step S303).

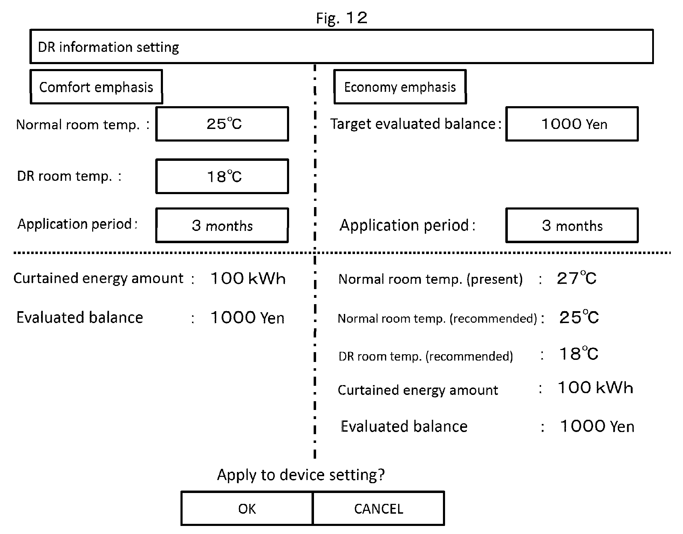

FIG. 12 is a diagram illustrating a display example when setting the demand response information of the setting display. A consumer can set the demand response information in both a comfort emphasis mode and an economy emphasis mode.

A screen for setting the demand response information in the comfort emphasis mode is displayed on the left side of FIG. 12, and a screen for setting the demand response information in the economy emphasis mode is displayed on the right side of FIG. 12.

In the comfort emphasis mode, the consumer input the room temperature during the demand response and the application period into the setting display 12. In this case, the room temperature during the normal operation may be input at that time and the room temperature during the normal operation input in advance may be displayed. When the room temperature during the normal operation, the room temperature during the demand response, and the application periods are input, the prediction estimator 11A presents the consumer with a curtailed energy amount expected when control was performed using the room temperature during the normal operation and the room temperature during the demand response and an incentive fee that the consumer obtains. In the example on the left side of FIG. 12, when the normal room temperature is 25°C, the DR room temperature is 18°C, and the application period is three months, the curtailed energy amount is 100 kWh and the incentive fee is 1000 yens. When the consumer inputs an operation of applying these values to the device setting, the prediction estimator 11A determines these setting values.

In the economy emphasis mode, the consumer inputs a target fee and an application period into the setting display 12. When the target fee and the application period are input, the prediction estimator 11A of the integrated control unit 11 presents the consumer with the recommended values of the normal room temperature and the DR room temperature at which it is predicted that the target fee is obtained in the application period, a curtailed energy amount, and an incentive fee. In the example on the right side of FIG. 12, when the normal room temperature is 27°C, the target fee is 1000 yens, and the application period is three months, it is recommended to set the normal room temperature to 25°C and the DR room temperature to 18°C, and when these values are applied, the curtailed energy amount is 100 kWh and the incentive fee is 1000 yens. When the consumer inputs an operation of applying these values to the device setting, the prediction estimator 11A determines these setting values.

When the demand response information is set, the integrated control unit 11 creates the energy consumption plan during the demand response operation.

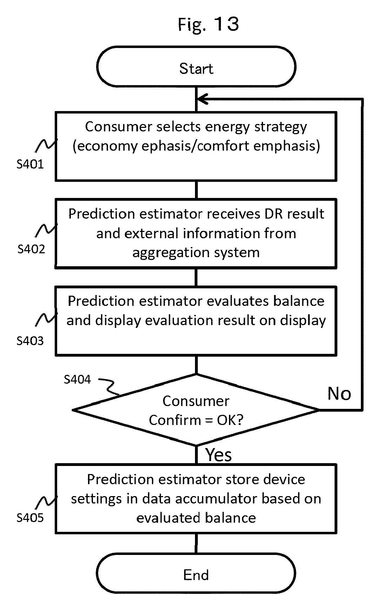

FIG. 13 is a flowchart illustrating a process of setting the demand response information.

First, the consumer selects an energy strategy among the economy emphasis and the comfort emphasis (step S401). The prediction estimator 11A receives the DR result and the external information from the aggregation system 20 (step S402). Further, the prediction estimator 11A evaluates a balance based on the DR result and the external information according to the selected energy strategy and displays the setting values and a curtailed amount of energy consumption and an incentive fee which are expected when the consumer complies with the demand response, and which are the result of the evaluated balance for the setting values, on the setting display 12 (step S403).

For example, the curtailed energy consumption amount in the application period can be calculated by predicting the number of successful bids of the demand responses in the application period from the DR results, calculating an expected curtailed energy consumption amount in one demand response under the weather and the temperature appearing in the external information, and multiplying the number of successful bids and the curtailed amount. The expected incentive fee in the application period of the demand response can be calculated based on the curtailed energy consumption amount in the application period.

When the consumer checks the result of the evaluated balance while viewing the information displayed on the setting display 12 and inputs the notice of acceptance into the setting display 12 (step S404: Yes), the prediction estimator 11A determines the setting values and stores the same in the data accumulator 11B (step S405). When the consumer inputs the notice of non-acceptance into the setting display 12 (step S404: No), the prediction estimator 11A returns to step S401.

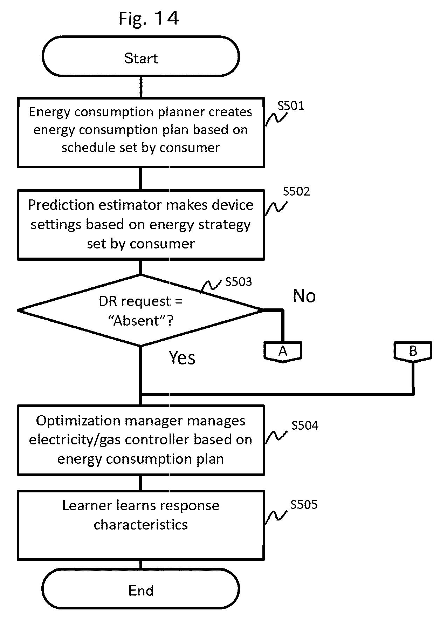

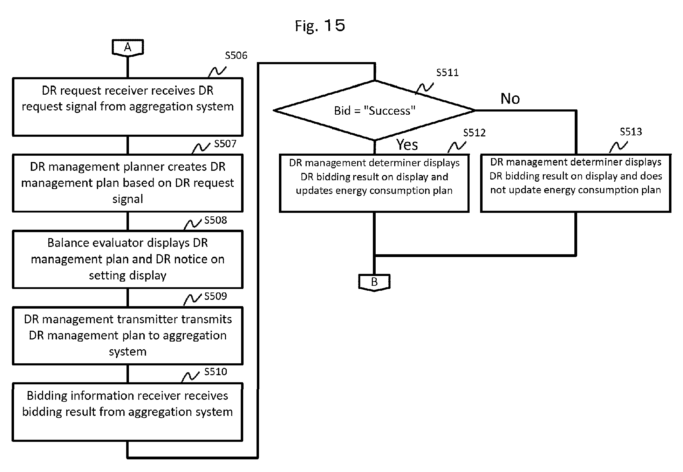

FIGS. 14 and 15 are flowcharts illustrating the process of responding to the DR request from the aggregation system 20 of the integrated control unit 11.

First, the energy consumption planner 117 creates an energy consumption plan based on the schedule set by the schematic configuration diagram (step S501). The energy consumption plan created herein is an energy consumption plan for the normal operation when a demand response is not present. Subsequently, the prediction estimator 11A makes a setting for controlling electric apparatuses and gas apparatuses based on the energy strategy set by the consumer (step S502).

When the DR request is absent (step S503: Yes), the optimization manager 118 controls the electric apparatuses with the aid of the electric power controller 15 and control the gas apparatuses with the aid of the gas controller 18 according to the energy consumption plan (step S504). In this case, the learner 119 learns the response characteristics of the electric apparatuses and the gas apparatuses with respect to the control (step S505).

On the other hand, when it is determined in step S503 that the DR request is present (step S503: No), the DR request receiver 111 receives a DR request signal from the aggregation system 20 (step S506). Subsequently, the DR management planner 112 creates a DR management plan based on the DR request signal (step S507).

The balance evaluator 113 displays, on the setting display 12, the DR management plan and a notice indicating that a demand response will be probably performed (step S508). The DR management transmitter 114 transmits the DR management plan to the aggregation system (step S509). The bidding information receiver 115 receives a bidding result from the aggregation system 20 (step S510).

When the bidding is successful, the DR management determiner 116 displays a bidding result that the trading is established on the setting display 12 and updates the energy consumption plan (step S512). On the other hand, when the bidding is not successful, the DR management determiner 116 displays a bidding result that the trading is not established on the setting display 12 and does not update the energy consumption plan (step S513).

After step S512 or S513 is performed, the flow proceeds to step S504.

The embodiments of the present invention described above are mere examples presented to explain the present invention, and the scope of the present invention is not to be limited to these embodiments. A person skilled in the art can implement the present invention in various other ways without departing from the spirit of the present invention.

## Claims

1. An energy control unit comprising:
a data accumulator that accumulates response measurement data obtained by measuring responses to control executed in relation to a demand amount of energy in a plurality of controllers which are used by a consumer and have different characteristics;
a learner that calculates response characteristics to control for adjusting a demand amount of energy used by the consumer based on the response measurement data;
an energy consumption planner that creates an energy consumption plan which is a time-series control plan on the energy consumption of the consumer;
a management planner that creates a demand response management plan for updating the energy consumption plan based on the response characteristics so that the demand amount of energy of the consumer is adjusted according to a given demand adjustment request;
a management determiner that updates the energy consumption plan according to the demand response management plan when a bidding based on the demand response management plan is successful in an energy trading market; and
a manager that executes control on the plurality of controllers of the consumer according to the energy consumption plan.

2. The energy control unit according to claim 1, wherein
the management planner creates a demand response management plan for a plurality of types of energy including electric energy based on a predetermined energy policy.

3. The energy control unit according to claim 2, wherein
the consumer includes an electricity storage device as an internal electric energy supply source and can further use gas energy, and
the management planner creates the demand response management plan in a demand response so that electric energy obtained by discharging the electricity storage device is used and the use of gas energy starts when an electricity storage amount of the electricity storage device decreases to a predetermined amount.

4. The energy control unit according to claim 3, wherein
the consumer includes an electric air-conditioning device, and a demand response setting temperature which is a setting temperature during a demand response operation and is lower than a normal setting temperature which is a setting temperature during a normal operation is set in advance, and
the management planner creates the demand response management plan such that the setting temperature is changed from the normal setting temperature to the demand response setting temperature when the demand response operation starts and such that discharge of the electricity storage device starts to maintain a room temperature at the demand response setting temperature when the room temperature reaches the demand response setting temperature.

5. The energy control unit according to claim 4, wherein
the consumer further includes a gas air-conditioning device, and
the management planner creates the demand response management plan such that the electric air-conditioning device is stopped and the gas air-conditioning device is operated so that the room temperature is maintained at the demand response setting temperature in a case where an electricity storage amount of the electricity storage device decreases to a predetermined amount when the room temperature is maintained at the demand response setting temperature by the discharge of the electricity storage device.

6. The energy control unit according to claim 3, wherein
the consumer includes an electric air-conditioning device,
a demand response has two energy consumption strategy modes including an economy emphasis mode in which a desired reward can be designated and a comfort emphasis mode in which an allowable demand response setting temperature can be designated,
the energy control unit further comprises:
a prediction estimator that estimates a setting temperature to be applied to each of a normal operation and a demand response according to the energy consumption strategy mode, presents balance evaluation information which associates a curtailed energy amount and a reward corresponding to the setting temperature to a user, and determines the setting temperature as the demand response setting temperature according to an operation of the user, and
the management planner creates the demand response management plan according to the demand response setting temperature determined by the prediction estimator.

7. The energy control unit according to claim 6, wherein
the consumer further includes a gas air-conditioning device, and
the manager changes a setting temperature of the electric air-conditioning device to the demand response setting temperature when a demand response operation starts, starts the discharge of the electricity storage device and monitors an electricity storage amount of the electricity storage device when a room temperature reaches the demand response setting temperature, and stops the discharge of the electricity storage device and stops the electric air-conditioning device to operate the gas air-conditioning device at the demand response setting temperature when the electricity storage amount decreases to the predetermined amount.

8. The energy control unit according to claim 1, wherein
when making a setting for a normal operation in the energy consumption plan, the energy consumption planner provides a graphical user interface capable of displaying a screen for inputting a default setting of each time slot that is common to a selected day of a week, a calendar in which a date for which a setting different from the standard setting is made can be selected, and a screen for inputting an individual setting of each time slot for the date selected on the calendar.

9. The energy control unit according to claim 1, wherein
environment information is given from an external system,
the data accumulator further accumulates environment information obtained when the control and the responses are measured,
the learner calculates response characteristics in each environment state based on the response measurement data and the environment information, and
the energy consumption planner creates the energy consumption plan based on schedule information indicating an expected behavior of the consumer in each time slot, the response measurement data, and the external information given from the external system.

10. The energy control unit according to claim 9, wherein
the control is control of a setting temperature of an air-conditioning device, the response is a room temperature, and the external information is at least one of weather and an ambient temperature.

11. An energy control system comprising:
the energy control unit according to any one of claims 1 to 10; and
a setting display that receives an operation and displays a screen, wherein
the setting display receives an input of schedule information in which information indicating whether a consumer stays at home is set for each time slot and transmits the schedule information to the energy control unit, and
the energy control unit creates the energy consumption plan so that control is performed differently between a time slot in which the consumer stays at home and a time slot in which the consumer is absent from home.

12. The energy control system according to claim 11, further comprising:
a smart meter that collects information on the consumption, storage, or generation of energy in a consumer apparatus that consumes, stores, or generates the energy and transmits the information to the energy control unit; and
a controller that controls the consumer apparatus according to an instruction of the energy control unit.

13. An energy management method for managing an energy demand of a consumer who complies with a demand response, comprising:
accumulating response measurement data obtained by measuring responses to control executed in relation to a demand amount of energy used by the consumer;
calculating response characteristics which are characteristics to control for adjusting a demand amount of energy used by the consumer based on the response measurement data;
creating an energy consumption plan which is a time-series control plan on the energy consumption of the consumer;
creating a demand response management plan for updating the energy consumption plan based on the response characteristics so that the demand amount of energy of the consumer is adjusted according to a given demand adjustment request;
updating the energy consumption plan according to the demand response management plan when a bidding based on the demand response management plan is successful in an energy trading market; and
executing control on the consumer according to the energy consumption plan.

14. The energy management method according to claim 11, wherein
a demand response management plan for a plurality of types of energy including electric energy is created based on a predetermined energy policy.
